# EUROPÄISCHE PATENTSCHRIFT

(11) **EP 2 392 614 B1**
(45) Veröffentlichungstag und Bekanntmachung des Hinweises auf die Patenterteilung: **13.12.2017**
(21) Anmeldenummer: 11004306.4
(22) Anmeldetag: 25.05.2011
(51) Int. Cl.: C08L 1/28, C09D 7/00

(54) **Biostabile Celluloseether in nicht-wässriger Dispersion und damit hergestellte Dispersionsfarbe**
Biostable cellulose ether in non-aqueous dispersion and dispersion paint produced using same
Ether de cellulose biostable en dispersion non aqueuse et peinture de dispersion ainsi fabriquée

(30) Priorität: 02.06.2010 DE 102010022463
(43) Veröffentlichungstag der Anmeldung: 07.12.2011
(73) Patentinhaber: SE Tylose GmbH & Co.KG, 65203 Wiesbaden (DE)
(72) Erfinder: Galler, Heiko, 55270 Sörgenloch (DE); Fischer, Jürgen, 65207 Wiesbaden (DE); Berger, Leif, Dr., 55124 Mainz (DE)
(74) Vertreter: Plate, Jürgen

(56) Entgegenhaltungen:
- EP-A2- 0 894 834
- US-A1- 2006 160 921
- Dow chemical: "Cellosize ER 52 M", , Dezember 2001 (2001-12), XP002661022, Gefunden im Internet: URL:http://msdssearch.dow.com/PublishedLit eratureDOWCOM/dh_0034/0901b80380034731.pdf ?filepath=cello/pdfs/noreg/325-00023.pdf&f romPage=GetDoc [gefunden am 2011-10-10]
- TOTHILL I E ET AL: "Biodeterioration of Waterborne Paint Cellulose Thickeners", INTERNATIONAL BIODETERIORATION AND BIODEGRADATION, ELSEVIER LTD, GB, Bd. 31, 1. Januar 1993 (1993-01-01), Seiten 241-254, XP002131475, ISSN: 0964-8305, DOI: 10.1016/0964-8305(93)90020-3

## Beschreibung

Die Erfindung betrifft eine nicht-wässrige, im wesentlichen wasserfreie Dispersion biostabiler, d.h. gegen den Abbau durch cellulytisch wirkende Enzyme weitgehend resistenter, Celluloseether. Sie betrifft ferner damit hergestellte Mittel zum Beschichten, speziell Dispersionsfarben, die insbesondere für den Innenanstrich geeignet sind.

Biostabile Hydroxyethylcellulose wie auch Verfahren zu deren Herstellung sind beispielsweise aus der DE 27 51411 (= US 4,084,060) und der DE 42 13 329 (= US 5,493,013) bekannt. Bei der Herstellung wird Zellstoff in einer wässrigen Aufschlämmung, die zusätzlich ein organisches Dispersionsmittel und NaOH enthält, mit Ethylenoxid hydroxyethyliert. Bei der Umsetzung mit dem Ethylenoxid wird das Verhältnis von Natriumhydroxid zu Cellulose zunächst auf etwa 0,3 bis 0,35 eingestellt bis ein MS von 0,6 bis 1,3 erreicht ist. Danach wird das Verhältnis auf etwa 0,06 bis 0,12 vermindert und die Hydroxyethylierung fortgesetzt bis eine HEC mit einem MS von etwa 3,6 bis 6,0 erhalten wird. Das wird durch teilweise oder vollständige Neutralisation des Natriumhydroxids erreicht. Es wird angenommen, dass durch diese Verfahrensweise der Anteil der unsubstituierten Hydroxygruppen in der Cellulose verkleinert wird, was die Anfälligkeit gegenüber enzymatischem Abbau vermindert.

Gemäß der DE '411 war es bekannt, Celluloseether als Andickungsmittel in wässrigen Latexfarben zu verwenden. Die Celluloseether wurden bisher praktisch ausschließlich in Form von Pulver zugesetzt. Pulver ist jedoch schwierig zu dosieren, Staub entwickelt sich dabei und das Auflösen des Pulvers in der Farbe beansprucht Zeit.

Cellulytisch wirkende Enzyme, wie sie insbesondere von Schimmelpilzen gebildet werden, können Celluloseether abbauen. Die Farbe wird dadurch dünnflüssig und läuft von senkrecht stehenden Substraten ab. Eine solche Farbe wird allgemein als "verdorben" angesehen. Um das zu verhindern, enthalten wässrige Latex- bzw. Dispersionsfarben in der Regel biocid wirkende Mittel.

Die Abnahme der Viskosität unter der Einwirkung von cellulytisch wirkenden Enzymen ist auch in dem Artikel von R. Dönges, "Entwicklungen in der Herstellung und Anwendung von Celluloseethern", in DAS PAPIER 12/1997, S. 653 - 660, speziell S. 658, Abb. 20, dargestellt.

Aus der US 6,306,933 B1 sind Dispersionen von wasserlöslichen Celluloseethern bekannt. Als Celluloseether konkret genannt sind unter anderen Hydroxyethylcellulose (HEC), Hydroxypropylcellulose (HPC), Methylcellulose (MC), Methyl-hydroxypropyl-cellulose (MHPC) und Methyl-hydroxyethyl-cellulose (MHEC). Die Dispersionen enthalten 1 bis 75 Gew.-% an Celluloseether und 99 bis 25 Gew.-%, jeweils bezogen auf das Gesamtgewicht der Dispersion, eines sauerstoffhaltigen, organischen Dispersionsmittels, das für den Celluloseether ein "Nicht-Lösemittel" darstellt. Bevorzugt besteht die flüssige Phase in der Dispersion aus Ketonen, Carbonaten, Estern, Ester-alkoholen und/oder Glykolethern. Konkret genannt sind unter anderen Ethyl-methyl-keton, Propylencarbonat, Ethylencarbonat, Propionsäure-ethylester und -n-propylester und 2-Ethoxy-ethylacetat und Diethylenglykol-monobutylether-acetat. Zusätzlich kann die Dispersion Verdicker enthalten, beispielsweise hydrophobierte Kieselsäure. Die Celluloseether-Dispersionen werden insbesondere zur Herstellung von Latex-Farben auf wässriger Basis eingesetzt. Sie haben jedoch den Nachteil, dass sie flüchtige organische Verbindungen (VOC's) enthalten, die in die Umgebungsluft entweichen können.

Gegenstand der DE 31 35 892 sind nicht-wässrige Aufschlämmungen von wasserlöslichen Celluloseethern. Sie enthalten neben 1 bis 60 Gew.-% eines wasserlöslichem Celluloseether 20 bis 95 Gew.-% eines wasserunlöslichen flüssigen Kohlenwasserstoffs, 1 bis 10 Gew.-% eines nicht-ionisches oberflächenaktives Mittel mit einem HLB-Wert von 7 bis 14, 1 bis 4 Gew.-% eines organisch modifiziertes Tons sowie 1 bis 10 Gew.-% eines Stabilisierungsmittels. Der flüssige Kohlenwasserstoff ist bevorzugt Mineralöl, Kerosin, Diesel oder Naphtha. Die Aufschlämmungen eignen sich zum Verdicken von Flüssigkeiten, wie sie bei Öl- oder Gasbohrungen notwendig sind, oder von Abschlußflüssigkeiten.

In der US 2006/0160921 A1 ist eine nicht-wäßrige Celluloseether-Suspension offenbart, die als Verdicker und Entschäumer in wäßrigen Latex-Farben eingesetzt werden kann. Sie umfaßt einen in Wasser quellbaren Celluloseether, insbesondere eine Hydroxyethylcellulose, in einem wasserunlöslichen, sauerstoff-freien organischen Mittel, bevorzugt Mineralöl, Kerosin oder Diesel, sowie einen auf Mineralöl basierenden Entschäumer.

Bekannt sind schließlich auch HEC's, die in wässrigen Salzlösungen gelöst sind. Die Salzlösungen enthalten einen erheblichen Anteil an Salz, beispielsweise an Natriumformiat oder Magnesiumchlorid. Solche Lösungen sind beispielsweise erhältlich unter der Bezeichnung ®Admiral oder ®Natrosol FPS (Fluidized Polymer Suspension) von der Aqualon Company, Wilmington, Delaware. Solche Salzlösungen wirken jedoch stark korrosiv. Mit solchen wässrigen HEC-Salzlösungen hergestellte Dispersionsfarben sind zudem weniger lagerstabil. Durch das Salz ist zudem häufig die Naßabriebbeständigkeit der Farbanstriche beeinträchtigt.

Es bestand daher nach wie vor die Aufgabe, einen gegen enzymatischen Abbau stabilen Celluloseether in flüssiger Form zur Verfügung zu stellen, der sich ohne Staubentwicklung gut dosieren läßt und leicht und schnell in eine wässrige Dispersionsfarbe eingearbeitet werden kann. Die Celluloseether-Dispersion soll möglichst frei anorganischen Salzen sein und nicht korrosiv wirken. Sie soll einen möglichst geringen Anteil an flüchtigen organischen Verbindungen (VOCs) enthalten. Zudem soll die Dispersion einen hohen Anteil an Celluloseether enthalten.

Gelöst wurde die Aufgabe durch eine Dispersion von biostabilen Celluloseethern in einer flüssigen Phase, die im wesentlichen frei ist von Wasser oder anderen Lösemitteln für Celluloseether. Die flüssige Phase umfaßt eine Kombination aus einem natürlichen oder synthetischen Öl und einem Entschäumer.

Gegenstand der Erfindung ist demgemäß eine im wesentlichen wasserfreie Suspension, die mindestens eine gegen enzymatischen Abbau stabile Hydroxyalkylcellulose mit einem MS von 1,0 bis 3,0, mindestens ein Öl und mindestens einen Entschäumer umfasst und dadurch gekennzeichnet ist, dass das Öl ein natürliches Öl, ausgewählt aus Rizinusöl, Sonnenblumenöl, Rapsöl oder Rapsöl-alkylester, und alkoxyliertem Triglycerid ist. Der Celluloseether ist vorzugsweise eine Hydroxyethylcellulose (HEC) mit einem MS von 1,0 bis 3,0, bevorzugt von 1,8 bis 2,8, besonders bevorzugt etwa 2,4.

Für die Herstellung der erfindungsgemäßen Suspension wird eine biostabile Hydroxyalkylcellulose, bevorzugt eine biostabile Hydroxyethylcellulose, verwendet. Bei deren Herstellung wird Zellstoff in einer wässrigen Aufschlämmung, die gegebenenfalls zusätzlich ein organisches Dispersionsmittel und NaOH enthält, mit Alkylenoxid, insbesondere mit Ethylenoxid, hydroxyalkoxyliert. Bei der Umsetzung mit dem Alkylenoxid wird im ersten Schritt das Verhältnis von Natriumhydroxid zu Cellulose zunächst auf etwa 0,8 bis 2,0 mol(NaOH)/mol(Zellstoff) eingestellt und bis zu einem MS von 0,6 bis 1,3 hydroxyalkoxyliert. Danach wird das Verhältnis auf etwa 0,01 bis 0,6 vermindert und die Hydroxyalkoxylierung fortgesetzt bis zu einem MS von etwa 1,0 bis 4,0.

Das Öl ist ein natürliches Öl. Daneben oder auch zusätzlich können synthetische Öle verwendet werden. Dazu zählen insbesondere natürliche Öle wie Rizinusöl, Sonnenblumenöl oder Rapsöl und Ester davon, insbesondere der als "Biodiesel" bekannte Rapsölmethylester (RME), oder alkoxylierte Triglyceride.

Der Entschäumer ist bevorzugt eine hydrophobe Kieselsäure, ein Wachs, speziell ein Montanwachs.

Der biostabile Celluloseether ist in einer bevorzugten Ausführungsform ein nicht-ionischer Celluloseether, besonders bevorzugt eine Hydroxyalkylcellulose, speziell Hydroxyethylcellulose (HEC). Der MS(HE) der HEC beträgt bevorzugt 1,0 bis 3,0, insbesondere 1,5 bis 2,8, der mittlere Polymerisationsgrad DP_{w} der HEC etwa 10 bis 3.000. Es war überraschend, dass eine Hydroxyalkylcellulose mit einem im Vergleich zum Stand der Technik relativ geringen MS eine so hohe Biostabilität zeigt.

Der Anteil an Hydroxyalkylcellulose beträgt allgemein etwa 15 bis 75 Gew.-%, bevorzugt etwa 20 bis 60 Gew.-%, besonders bevorzugt etwa 30 bis 50 Gew.-%, insbesondere etwa 40 Gew.-%, jeweils bezogen auf das Gesamtgewicht der Suspension.

Öl und Entschäumer haben zusammen einen Anteil von etwa 25 bis 85 Gew.-%, bevorzugt etwa 40 bis 80 Gew.-%, besonders bevorzugt etwa 50 bis 70 Gew.-%, insbesondere etwa 60 Gew.-%, jeweils bezogen auf das Gesamtgewicht der Suspension.

"Im wesentlichen wasserfrei" bedeutet im Zusammenhang mit der vorliegenden Erfindung, dass die Suspension weniger als 3 Gew.-%, bevorzugt weniger als 2 Gew.-%, besonders bevorzugt weniger als 1 Gew.-%, an Wasser enthält, jeweils bezogen auf das Gesamtgewicht der Suspension.

Als "biostabil" wird im Zusammenhang mit der vorliegenden Erfindung eine Hydroxyalkylcellulose bezeichnet, wenn die Brookfield-Viskosität RVT einer 1 gew.-%igen wässrigen Lösung davon bei einer Temperatur von 20 °C ± 0,1 °C, bestimmt mit Spindel 5 bei 20 Umdrehungen pro Minute, einen Abfall von nicht mehr als 20 %, bevorzugt nicht mehr 15 %, innerhalb von 4 Stunden bei der Einwirkung einer 0,05 gew.-%igen Cellulase-Lösung (beispielsweise einer Aspergillus niger-Lösung) zeigt.

Geeignete Kombinationen von Öl und Entschäumer sind kommerziell erhältlich.

Herstellen lassen sich die biostabilen Celluloseether insbesondere nach dem in der oben genannten DE 27 51 411 beschriebenen Verfahren, bei dem der Alkalianteil während der Veretherung vermindert wird. Dabei wird ausschließlich mit Alkylenoxiden, insbesondere mit Ethylenoxid, umgesetzt. Die in der erfindungsgemäßen Suspension eingesetzte Hydroxyalkylcellulose enthält dementsprechend keine anderen Ethergruppen.

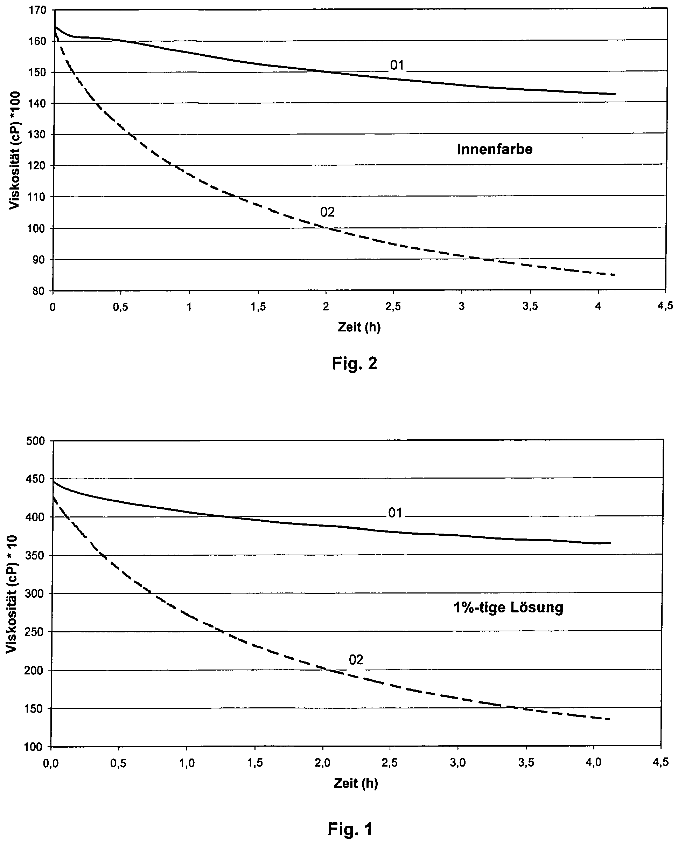

Die erfindungsgemäße Suspension ist wesentlich stabiler gegenüber enzymatischem Abbau als eine mit herkömmlichen Celluloseethern hergestellte Suspension. Das zeigt sich an einem stark verminderten Viskositätsabbau, wie in Fig. 1 dargestellt. Dort ist die Viskosität einer 1 gew.-%igen wässrigen Lösung eines biostabilen HEC gegenübergestellt der Viskosität der entsprechenden Lösung einer konventionellen HEC.

Gegenstand der vorliegenden Erfindung ist ferner eine mit der beschriebenen nicht-wässrigen Suspension hergestellte Dispersionsfarbe. Im Vergleich zu einer konventionellen Dispersionsfarbe ist die erfindungsgemäße Dispersionsfarbe wesentlich stabiler gegenüber Enzymen wie sie insbesondere von Schimmelpilzen (Aspergillus niger usw.) gebildet werden. Erkennbar ist dies an einer wesentlich geringeren Abnahme der Viskosität (s. Fig. 2). Der Anteil der erfindungsgemäßen Celluloseether-Suspension an der erfindungsgemäßen Dispersionsfarbe beträgt allgemein 0,001 bis 10 Gew.-%, bevorzugt 0,01 bis 1,0 Gew.-%, jeweils bezogen auf das Gesamtgewicht der Farbe. Die Dispersionsfarbe enthält allgemein weniger als 10 Gew.-%, bevorzugt weniger als 5 Gew.-%, besonders bevorzugt weniger als 3 Gew.-%, jeweils bezogen auf ihr Gesamtgewicht, an organischen Lösemitteln. Sie eignet sich besonders für den Anstrich von Innen- und Aussenwänden von Gebäuden.

Die erfindungsgemäße Dispersionsfarbe ist besonders widerstandsfähig gegen Schimmelbefall und zeigt daher eine verbesserte Lagerbeständigkeit, d.h. ihre Konsistenz bleibt länger erhalten. Damit hergestellte Anstriche zeigen zudem eine hohe Abriebfestigkeit.

Schließlich ist auch ein Verfahren zur Herstellung der genannten Dispersionsfarbe Teil der vorliegenden Erfindung. Ein wesentliches Merkmal des Verfahrens besteht darin, dass eine nicht-wässrige Dispersion des beschriebenen biostabilen Celluloseethers eingearbeitet wird. Die erfindungsgemäße Dispersion lässt sich wesentlich leichter dosieren und schneller sowie staubfrei gleichmäßig einarbeiten als ein pulverförmiger Celluloseether. Der Celluloseether wirkt als Verdickungsmittel in der Dispersionsfarbe. Die erfindungsgemäße Suspension hat den weiteren Vorteil, dass sie praktisch zu jedem Zeitpunkt der Farbenherstellung zugegeben werden kann. Sie muss also nicht unter Einhaltung einer bestimmten Reihenfolge zugesetzt werden und es wird auch keine Vorquellzeit für den Celluloseether nach der Zugabe benötigt. Die nachfolgenden Beispiele dienen zur Illustration der Erfindung. Prozente sind darin als Gewichtsprozente zu verstehen, soweit nicht anders angegeben oder aus dem Zusammenhang unmittelbar ersichtlich. "Gt" steht für Gewichtsteil(e). Die Bestimmung der Viskosität der Celluloseether erfolgte mit einem Brookfield Rotations-Viskosimeter, Modell RVT.

### Beispiel 1 (nicht-wässrige Suspension einer biostabilen HEC) (Vergleichsbeispiel):

Es wurde eine Suspension hergestellt aus

| | | |
|---|---|---|
| 40 | Gt | einer Hydroxyethylcellulose mit einem MS (HE) von 2,4 bis 2,8 und einer Viskosität Brookfield RV, bestimmt an einer 1 %igen wässrigen Lösung des absolut trockenen Celluloseethers in Wasser (20° dH) mit Spindel 4, 20 Upm, von etwa 4900 mPa s (HS 100000 YP2 der SE Tylose GmbH und Co. KG) und |
| 60 | Gt | einer Kombination modifizierter, nichtionogener Fettstoffe, hydrophober Kieselsäure und aromatenfreier medizinischer Weißöle (®Agitan 265 der Münzing Chemie GmbH) |

Die Biostabilität der HEC wurde bestimmt an einer 1 %igen wässrigen Lösung folgender Zusammensetzung:

| | | |
|---|---|---|
| 12,5 | Gt | HS 100000 YP2 |
| 5 | Gt | 0,5 %iger wässriger Ammoniaklösung |
| 482,5 | Gt | Wasser (20 ° deutscher Härte) und |
| 5 | Gt | einer Cellulase-Lösung bereitet aus 0,1 Gt Cellulase und 500 Gt vollentsalztem Wasser |

Die Brookfield-Viskosität RVT der Lösung bei 20 °C wurde sofort nach Zugabe der Cellulase sowie nach 4 Stunden Rühren bei 20 °C unter Einwirkung der Cellulase bestimmt. Eingesetzt wurde dabei eine Spindel 5 mit 20 Umdrehungen pro Minute.

Betrug die Viskosität am Anfang noch 4400 mPa s, so war sie nach 4 Stunden auf 3640 mPa s zurückgegangen.

### Beispiel 2 (nicht-wässrige Suspension einer konventionellen HEC) (Vergleichsbeispiel) Es wurde eine Suspension hergestellt aus

| | | |
|---|---|---|
| 40 | Gt | einer Hydroxyethylcellulose mit einem MS von 2,4 bis 2,8 und einer Viskosität Brookfield RV, Spindel 4, 20 Upm, gemessen an einer 1 %igen Lösung des absolut trockenen Celluloseethers in Wasser (20° dH) bei 20 °C von 1270 mPa s (H 100000 YP2 der SE Tylose GmbH und Co. KG) und |
| 60 | Gt | ®Agitan 265 |

Die Biostabilität dieser HEC wurde untersucht anhand einer Zusammensetzung, die der im Beispiel 1 glich mit der einzigen Abweichung, dass die biostabile HEC durch die genannte konventionelle HEC ersetzt war.

Als Maßstab für die Biostabilität wurde wie im Beispiel 1 der Viskositätsabbau genommen. Die Messbedingungen waren die gleichen wie im Beispiel 1. Die Brookfield-Viskosität fiel von 4260 mPa s zu Beginn des Versuchs auf 1360 mPa s nach 4 Stunden. Der Viskositätsabbau war also wesentliche größer als im Beispiel 1.

**Tabelle 1**

| | Brookfield RVT-Viskosität* ursprünglich [mPa s] | Brookfield RVT-Viskosität* nach Cellulase-Einwirkung** [mPa s] |
|---|---|---|
| Beispiel 1 | 4400 | 3640 |
| Beispiel 2 | 4260 | 1360 |

| | | |
|---|---|---|
| * Spindel 5, 20 Umdrehungen pro Minute, bei 20 °C ** bestimmt mit Spindel 5, 20 Upm, bei 20 °C, nach 4 Stunden Einwirkung der Cellulase bei 20 °C | | |

Eine graphische Darstellung des Viskositätsrückgangs der 1 %igen Lösungen gemäß den Beispielen 1 und 2 ist als Fig. 1 beigefügt.

### Beispiel 3 (Dispersionsfarbe hergestellt mit konventioneller HEC in Pulverform) (Vergleichsbeispiel):

Es wurde eine Dispersionsfarbe für Innenanstriche hergestellt, indem

| | | |
|---|---|---|
| 297,75 | Gt | Wasser (20° dH) vorgelegt, |
| 2,0 | Gt | Konservierungsmittel (Mergal K 9 N), |
| 1,0 | Gt | Konservierungsmittel (Calgon N) und |
| 2,0 | Gt | Netzmittel (Tego Dispers 715 W) hinzugefügt wurden. Dann wurden |
| 2,5 | Gt | HEC (HS 100000 YP2 der SE Tylose GmbH & Co. KG), sowie |
| 75,0 | Gt | Titandioxid-Weißpigment (Kronos 2043), |
| 420,0 | Gt | gefälltes Carbonat als Füllstoff (Omyacarb 5 GU), |
| 50,0 | Gt | gefälltes Carbonat als Füllstoff (Omyacarb extra GU) |
| 25,0 | Gt | Füllstoff (China Clay Grade B), |
| 1,0 | Gt | 10 gew.-%ige wässrige Natronlauge und |
| 120,0 | Gt | Ethylen/Vinylacetat-Copolymer-Dispersion mit einem Festkörpergehalt von 53 |
| | | % (®Mowilith LDM 1871) hinzugefügt. |

Zur Prüfung der Biostabilität wurde die Dispersionsfarbe mit 5 Gt der im Beispiel 1 beschriebenen Cellulase-Lösung aus Aspergillus niger behandelt und die Viskosität sofort nach der Zugabe bestimmt. Die Viskositätsbestimmung wurde nach 4 Stunden wiederholt. Die Ergebnisse sind in der nachfolgenden Tabelle zusammengefasst.

### Beispiel 4 (Dispersionsfarbe hergestellt mit konventioneller HEC in Form einer nicht-wässrigen Suspension) (Vergleichsbeispiel)

Es wurde eine Dispersionsfarbe für Innenanstriche hergestellt, indem

| | | |
|---|---|---|
| 297,75 | Gt | Wasser (20° dH) vorgelegt, |
| 2,0 | Gt | Konservierungsmittel (Mergal K 9 N), |
| 1,0 | Gt | Konservierungsmittel (Calgon N) und |
| 2,0 | Gt | Netzmittel (Tego Dispers 715 W) hinzugefügt wurden. Dann wurden |
| 6,25 | Gt | HEC (H 100000 YP2 der SE Tylose GmbH & Co. KG), in flüssiger Form, enthaltend 3,75 Gt Agitan 265 zugesetzt, sowie |
| 75,0 | Gt | Titandioxid-Weißpigment (Kronos 2043), |
| 420,0 | Gt | gefälltes Carbonat als Füllstoff (Omyacarb 5 GU), |
| 50,0 | Gt | gefälltes Carbonat als Füllstoff (Omyacarb extra GU) |
| 25,0 | Gt | Füllstoff (China Clay Grade B), |
| 1,0 | Gt | 10 gew.-%ige wässrige Natronlauge und |
| 120,0 | Gt | Ethylen/Vinylacetat-Copolymer-Dispersion mit einem Festkörpergehalt von 53 % (®Mowilith LDM 1871) hinzugefügt. |

Zur Prüfung der Biostabilität wurde die Dispersionsfarbe mit 5 Gt der im Beispiel 1 beschriebenen Cellulase-Lösung aus Aspergillus niger behandelt und die Viskosität sofort nach der Zugabe bestimmt. Die Viskositätsbestimmung wurde nach 4 Stunden wiederholt. Die Ergebnisse sind in der nachfolgenden Tabelle zusammengefasst.

### Beispiel 5 (Dispersionsfarbe hergestellt mit einer erfindungsgemäßen HEC-Suspension) (Vergleichsbeispiel)

Es wurde eine Dispersionsfarbe für Innenanstriche hergestellt, indem

| | | |
|---|---|---|
| 297,75 | Gt | Wasser vorgelegt, |
| 2,0 | Gt | Konservierungsmittel (Mergal K 9 N), |
| 1,0 | Gt | Konservierungsmittel (Calgon N) und |
| 2,0 | Gt | Netzmittel (Tego Dispers 715 W) hinzugefügt wurden. Dann wurden |
| 6,25 | Gt | biostabile HEC (HS 100000 YP2 der SE Tylose GmbH & Co. KG), in flüssiger Form, enthaltend 3,75 Gt Agitan 265 zugesetzt, sowie |
| 75,0 | Gt | Titandioxid-Weißpigment (Kronos 2043), |
| 420,0 | Gt | gefälltes Carbonat als Füllstoff (Omyacarb 5 GU), |
| 50,0 | Gt | gefälltes Carbonat als Füllstoff (Omyacarb extra GU) |
| 25,0 | Gt | Füllstoff (China Clay Grade B), |
| 1,0 | Gt | 10 gew.-%ige wässrige Natronlauge und |
| 120,0 | Gt | Ethylen/Vinylacetat-Copolymer-Dispersion mit einem Festkörpergehalt von 53 % (Mowilith LDM 1871) hinzugefügt. |

Wie im Beispiel 4 beschrieben, wurde die Viskosität der Dispersionsfarbe sofort nach Zumischen der Cellulase und dann erneut nach 4 Stunden Einwirken der Cellulase bestimmt.

**Tabelle 2:**

| | Brookfield-Viskosität*** sofort [mPa s] | Brookfield-Viskosität*** nach 4 Stunden [mPa s] | Abbau-Quotient AQ**** |
|---|---|---|---|
| Beispiel 3 (Vergleich) | 16 700 | 12 985 | 0,78 |
| Beispiel 4 (Vergleich) | 16 800 | 8480 | 0,50 |
| Beispiel 5 | 16 600 | 14 240 | 0,86 |

| | | | |
|---|---|---|---|
| *** Bestimmt mit Spindel 5, 10 Umdrehungen pro Minute bei 20 °C; Brookfield-Viskosimeter RVT **** Abbau-Quotient (AQ) = Viskosität nach 4 h / Viskosität am Anfang | | | |

Eine graphische Darstellung des Viskositätsrückgangs der Farbe gemäß dem Vergleichsbeispiel 4 und dem Beispiel 5 ist als Fig. 2 beigefügt.

Wie die Daten in der Tabelle 2 und Fig. 2 deutlich zeigen, ist der Viskositätsrückgang bei der mit der erfindungsgemäßen flüssigen HEC hergestellten Dispersionsfarbe deutlich geringer. Das bedeutet auch, dass diese Farbe haltbarer und damit länger lagerfähig ist.

## Patentansprüche

1. Im wesentlichen wasserfreie Suspension, die mindestens eine gegen enzymatischen Abbau stabile Hydroxyalkylcellulose mit einem MS von 1,0 bis 3,0, mindestens ein Öl und mindestens einen Entschäumer umfasst, **dadurch gekennzeichnet, dass** das Öl ein natürliches Öl, ausgewählt aus Rizinusöl, Sonnenblumenöl, Rapsöl oder Rapsöl-alkylester und alkoxyliertem Triglycerid ist.

2. Suspension gemäß Anspruch 1, **dadurch gekennzeichnet, dass** die Hydroxyalkylcellulose eine Hydroxyethylcellulose ist.

3. Suspension gemäß Anspruch 1 oder 2, **dadurch gekennzeichnet, dass** die Hydroxyalkylcellulose einen MS von 1,5 bis 2,8, bevorzugt etwa 2,4, und/oder einen mittleren Polymerisationsgrad DP_{w} von 10 bis 3 000 aufweist.

4. Suspension gemäß einem oder mehreren der Ansprüche 1 bis 3, **dadurch gekennzeichnet, dass** der Entschäumer eine hydrophobe Kieselsäure, ein Wachs, bevorzugt ein Montanwachs, ist.

5. Suspension gemäß einem oder mehreren der Ansprüche 1 bis 4, **dadurch gekennzeichnet, dass** der Anteil an Hydroxyalkylcellulose 15 bis 75 Gew.-%, bevorzugt 20 bis 60 Gew.-%, besonders bevorzugt 30 bis 50 Gew.-%, insbesondere etwa 40 Gew.-%, beträgt, jeweils bezogen auf das Gesamtgewicht der Suspension.

6. Suspension gemäß einem oder mehreren der Ansprüche 1 bis 5, **dadurch gekennzeichnet, dass** der Anteil an Öl und Entschäumer zusammen 25 bis 85 Gew.-%, bevorzugt etwa 40 bis 80 Gew.-%, besonders bevorzugt etwa 50 bis 70 Gew.-%, insbesondere etwa 60 Gew.-%, beträgt, jeweils bezogen auf das Gesamtgewicht der Suspension.

7. Suspension gemäß einem oder mehreren der Ansprüche 1 bis 6, **dadurch gekennzeichnet, dass** der Anteil an Wasser weniger als 3 Gew.-%, bevorzugt weniger als 2 Gew.-%, besonders bevorzugt weniger als 1 Gew.-%, beträgt, jeweils bezogen auf das Gesamtgewicht der Suspension.

8. Dispersionsfarbe mit einer Hydroxyalkylcellulose, **dadurch gekennzeichnet, dass** sie eine Suspension gemäß einem oder mehreren der Ansprüche 1 bis 7 umfasst.

9. Dispersionsfarbe gemäß Anspruch 8, **dadurch gekennzeichnet, dass** sie weniger als 10 Gew.-%, bevorzugt weniger als 5 Gew.-%, besonders bevorzugt weniger als 3 Gew.-%, jeweils bezogen auf ihr Gesamtgewicht, an organischen Lösemitteln enthält.

10. Verfahren zur Herstellung einer Dispersionsfarbe gemäß Anspruch 8 oder 9, **dadurch gekennzeichnet, dass** darin die Suspension gemäß einem oder mehreren der Ansprüche 1 bis 9 in einem Anteil von 0,001 bis 10 Gew.-%, bezogen auf das Gesamtgewicht der Dispersionsfarbe, zugemischt wird.

11. Verwendung der Dispersionsfarbe gemäß Anspruch 8 oder 9 für Innenanstriche.

## Claims

1. Substantially anhydrous suspension comprising at least one hydroxyalkylcellulose which is stable toward enzymatic degradation and has an MS of 1.0 to 3.0, at least one oil, and at least one defoamer, **characterized in that** the oil is a natural oil, selected from castor oil, sunflower oil, rapeseed oil or rapeseed oil alkyl ester and alkoxylated triglyceride.

2. Suspension according to Claim 1, **characterized in that** the hydroxyalkylcellulose is a hydroxyethylcellulose.

3. Suspension according to Claim 1 or 2, **characterized in that** the hydroxyalkylcellulose has an MS of 1.5 to 2.8, preferably about 2.4, and/or an average degree of polymerization DP_{w} of 10 to 3000.

4. Suspension according to one or more of Claims 1 to 3, **characterized in that** the defoamer is a hydrophobic silica or a wax, preferably a montan wax.

5. Suspension according to one or more of Claims 1 to 4, **characterized in that** the fraction of hydroxylalkylcellulose is 15 to 75 % by weight, preferably 20 to 60 % by weight, more preferably 30 to 50 % by weight, more particularly about 40 % by weight, based in each case on the total weight of the suspension.

6. Suspension according to one or more of Claims 1 to 5, **characterized in that** the fraction of oil and defoamer together is 25 to 85 % by weight, preferably about 40 to 80 % by weight, more preferably about 50 to 70 % by weight, more particularly about 60 % by weight, based in each case on the total weight of the suspension.

7. Suspension according to one or more of Claims 1 to 6, **characterized in that** the fraction of water is less than 3 % by weight, preferably less than 2 % by weight, more preferably less than 1 % by weight, based in each case on the total weight of the suspension.

8. Emulsion paint comprising a hydroxyalkylcellulose, **characterized in that** it further comprises a suspension according to one or more of Claims 1 to 7.

9. Emulsion paint according to Claim 8, **characterized in that** it comprises less than 10 % by weight, preferably less than 5 % by weight, more preferably less than 3 % by weight, based in each case on its total weight, of organic solvents.

10. Process for preparing an emulsion paint according to Claim 8 or 9, **characterized in that** it comprises admixing therein the suspension according to one or more of Claims 1 to 9 in a fraction of 0.001 to 10 % by weight, based on the total weight of the emulsion paint.

11. Use of the emulsion paint according to Claim 8 or 9 for interior coatings.

## Revendications

1. Suspension globalement non aqueuse, qui comprend au moins une cellulose hydroxyalkylique stable à la dégradation enzymatique avec un MS de 1,0 à 3,0, au moins une huile et au moins un antimoussant, **caractérisée en ce que** l'huile est une huile naturelle, choisie parmi l'huile de ricin, l'huile de tournesol, l'huile de colza ou l'ester alkylique d'huile de colza et un triglycéride alcoxylé.

2. Suspension selon la revendication 1, **caractérisée en ce que** la cellulose hydroxyalkylique est une cellulose hydroxyéthylique.

3. Suspension selon la revendication 1 ou 2, **caractérisée en ce que** la cellulose hydroxyalkylique a un MS de 1,5 à 2,8, de préférence d'environ 2,4, et/ou un degré de polymérisation moyen DP_{w} de 10 à 3 000.

4. Suspension selon une ou plusieurs des revendications 1 à 3, **caractérisée en ce que** l'antimoussant est un acide silicique hydrophobe, une cire, de préférence une cire de lignite.

5. Suspension selon une ou plusieurs des revendications 1 à 4, **caractérisée en ce que** la proportion de cellulose hydroxyalkylique est de 15 à 75 % en poids, de préférence de 20 à 60 % en poids, de manière particulièrement préférée de 30 à 50 % en poids, en particulier d'environ 40 % en poids, à chaque fois par rapport au poids total de la suspension.

6. Suspension selon une ou plusieurs des revendications 1 à 5, **caractérisée en ce que** la proportion d'huile et d'antimoussant est conjointement de 25 à 85 % en poids, de préférence d'environ 40 à 80 % en poids, de manière particulièrement préférée d'environ 50 à 70 % en poids, en particulier d'environ 60 % en poids, à chaque fois par rapport au poids total de la suspension.

7. Suspension selon une ou plusieurs des revendications 1 à 6, **caractérisée en ce que** la proportion d'eau est inférieure à 3 % en poids, de préférence inférieure à 2 % en poids, de manière particulièrement préférée inférieure à 1 % en poids, à chaque fois par rapport au poids total de la suspension.

8. Peinture en dispersion avec une cellulose hydroxyalkylique, **caractérisée en ce qu'**elle comprend une suspension selon une ou plusieurs des revendications 1 à 7.

9. Peinture en dispersion selon la revendication 8, **caractérisée en ce qu'**elle contient moins de 10 % en poids, de préférence moins de 5 % en poids, de manière particulièrement préférée moins de 3 % en poids, à chaque fois par rapport à son poids total, de solvants organiques.

10. Procédé de fabrication d'une peinture en dispersion selon la revendication 8 ou 9, **caractérisé en ce que** la suspension selon une ou plusieurs des revendications 1 à 9 est mélangée à ladite peinture dans une proportion de 0,001 à 10 % en poids par rapport au poids total de la peinture en dispersion.

11. Utilisation de la peinture en dispersion selon la revendication 8 ou 9 pour des peintures d'intérieur.
